# EUROPEAN PATENT APPLICATION

(11) **EP 0 701 250 A1**
(43) Date of publication of application: **13.03.1996**
(21) Application number: 95303983.1
(22) Date of filing: 09.06.1995
(51) Int. Cl.: G11B 5/704

(54) **Magnetic recording media**

(30) Priority: 18.08.1994 US 291084
(71) Applicant: SONY ELECTRONICS INC., Park Ridge, New Jersey 07656-8003 (US)
(72) Inventor: Inoue, Satoru, Dothan, Alabama 36301 (US); Womble, James Tokuhei, Dothan, Alabama 36301 (UA); Kozumi, Tetsuo, Iwanuma-City, Miyagi 989-21 (JP); Takahashi, Hitoshi, Shinagawa-ku Tokyo (JP)
(74) Representative: Cotter, Ivan John

(57) **Abstract**

A magnetic recording medium consists of a magnetic recording layer (4), an electrically conductive layer (2) containing carbon, and a non-magnetic support (1). The medium can be used for real time or high speed duplication purposes. The conductive layer (2) consists of carbon (3) dispersed with high molecular weight binders. A lower carbon paint viscosity at higher shear rates is achieved with a higher % solids by weight than previously proposed. This, along with a higher weight % of carbon employed in the intermediate layer (2), improves surface conditions and coatability at normal and higher coating speeds.

## Description

This invention relates to magnetic recording media and to methods of constructing magnetic recording media.

Magnetic recording media are virtually ubiquitous in modern industrial society. However, such omnipresence does not signify that these media are without flaws. Indeed, one significant problem is that electrically resistive media develop static charges on their surface. This static charge results from a combination of the continuous movement of the tape during winding operations (generating static electricity from the movement and friction) and the high electrical resistance of the magnetic particles and binders employed in the magnetic media (preventing the dissipation of charge from the surface). This charge has a detrimental effect on signal recording, because it attracts foreign particles, such as dust, to the tape surface, resulting in spacing loss (resulting from the increased distance between the recording or playback head and the tape surface) and signal loss or dropout. Additionally, if the charge build-up is large enough, tape noise from static discharge can adversely affect the signal to noise (S/N) ratio of the tape.

Another problem related to surface static charge is the windability of video and audio pancakes. As is well known, a pancake is a hub of tape. The static charge can cause individual tape layers to align non-uniformly on a hub, thus creating poor appearance and resulting in various problems during winding, such as tape slip on the hub during high speed duplication. This slip is especially prevalent when using smooth basefilms, which have large layer-to-layer air films. The higher static charge produces enhanced movement or slipping between these layers.

Previously, approaches to reducing this static charge in magnetic recording media had been undertaken, but such attempts either did not succeed in significantly reducing the static charge or, while lowering the static charge, conferred other undesired properties or characteristics upon the magnetic media.

Higher dropout due to static charge buildup and charge retention in jumbo rolls is another problem resulting from static surface charge. After coating and calendaring (in which much winding occurs), jumbo rolls have several hundred kilovolts of static charge on them. This charge is strongest towards the center portion of each roll, where dissipation of the charge is most inhibited. During the subsequent slitting process in which the jumbo rolls are slit into individual tapes and wound on separate hubs or reels, the charged jumbo roll acts as a discharging capacitor, attracting foreign particles toward the tape. Because there is a greater charge buildup towards the center portion of each roll, a larger portion of foreign particles are attracted to these points relative to the outer portion. With basefilm particle debris, which have the same charge polarity as the basefilm itself, the particles are repelled from the basefilm side but attracted to the magnetic surface side of the tape, because like charges repel each other. Thus, significant dropout can occur, with more dropout occurring toward the center portion of each roll.

Charge buildup is even greater for jumbo rolls which are coated with thermosetting resins and oven-cured. After calendaring, these rolls are stored in a curing oven for an extended period of time. In this process, coated jumbo rolls are exposed to high heat to accelerate cross-linking of binders within the coated layer. This heat slightly shrinks the magnetic layer and increases the pressure within the roll. The combination of increased pressure and low humidity within the oven inhibits even more the dissipation of static charge from the rolls, especially towards the center of each roll. The charge remains after curing. Thus, the inner portion or cure-in (C/I) has higher dropout than the outer portion or cure-out (C/O). In some cases, these higher dropout portions cannot be used. A more uniform dropout level between C/I and C/O portions needs to be developed. This problem can be improved by producing a tape which has no charge buildup inside the roll.

One approach in the prior art to reducing surface static charge involved a magnetic recording medium having a magnetic layer and a basefilm, in which carbon black was added to the magnetic layer. However, this approach lowered the density of the magnetic powder in the magnetic layer and increased the magnetic paint viscosity which in turn made the paint harder to coat and thus produced an unsatisfactory surface roughness in the media, and rehired a viscous magnetic coating to be applied directly to the basefilm. The increased carbon black in the magnetic layer for reducing static charge resulted in a corresponding decrease in signal output, mainly due to the reduced density of magnetic powders in the magnetic layer.

Further, the magnetic paint used to form the magnetic layer is typically a viscous composition with a high % solid content by weight comprising rigid metal oxide or metal particles dispersed in viscous resins. Compared to the small, round carbon particles which are typically 0.01-0.04 µm in diameter, the average magnetic particles are very large, 0.2-0.8 µm x 0.03-0.13 µm, and acicular in shape. Adding carbon particles to the paint only increases the viscosity of the composition. During coating, the rigid and viscous magnetic paint is forced to flow out and coat a stiff non-magnetic substrate or basefilm. Because of these resistances, shear stresses develop during coating that are not easily dissipated. Thus, the resulting strain on the magnetic surface appears as defects, such as rougher tape surfaces and uneven coating thicknesses across the jumbo roll, which cause a machine direction stretch problem. A smooth magnetic surface, therefore, is difficult to achieve.

Compounding this problem is the absence in conventional coating technology of a technique to suppress larger undispersed fragments or particles in the paint, such as added abrasives or paint fragments, from disturbing the upper surface of the tape. Attempts to flatten or push down these larger particles from the top surface of the tape, such as employing smoothing bars during coating or calendaring after coating, are very difficult because the stiff and unyielding basefilm below will not absorb the particles and fragments. This problem is virtually impossible to solve with conventional coating techniques.

Additional surface roughness problems result from the characteristics of the basefilm surface. The non-magnetic substrates or basefilms used for magnetic recording mediums have varying degrees and heights of asperities on their surface, depending on the type and distribution of fillers that are used within the basefilm. Because the magnetic paint is viscous, inflexible, and brittle in nature, and because of the large size of the magnetic particles (relative to the small carbon particles or the size of the existing asperities, which are commonly 0.3-0.5 µm in height), the paint will, in general, take on the shape of the surface it covers. After calendaring (compressing the magnetic layer to the basefilm using high heat and pressure), this effect is even more pronounced. Thus, the surface of the magnetic layer will reflect the surface roughness of the basefilm layer below it.

To improve surface roughness, either the magnetic layer needs to be coated more thickly (which is inefficient) or a smoother basefilm needs to be applied (which is generally more expensive). Thus, solving magnetic surface roughness problems without increasing coating thickness or changing basefilms would be advantageous.

Bad roll appearance is also caused by coating thickness variations. When video, audio or computer media is produced, each is generally coated on wide basefilms (typically 24-48 inches) and then slit or punched into video, audio, or computer media. During coating, the viscous and inflexible magnetic layer can have a varying coating thickness across the roll. As the roll is coated, this uneven coating thickness can create one or more creases on the roll. These creased portions of the roll must be scraped.

An alternate approach to reducing surface static charge involved placing a conductive layer containing carbon black on the side of the basefilm opposite to the magnetic layer.

With such backcoated structures, light transmittance is lower (so the magnetic layer can be thinner) and guide pin abrasion on the basefilm side is reduced as a result of the protective layer. However, backcoated tapes usually cannot be used with contact type high speed duplicators because of carbon particles shedding onto the transfer drum. On the Sony Sprinter, for example, such shedding can cause a repeatable dropout every 8.5 seconds (NTSC, SP-mode) as the carbon debris sticks to a revolving transfer drum during pressure contact recording. Each time the debris is in contact with the Mirror Mother Master (a high coercivity tape which has the recorded mirror image information on it) and the copy tape, a spacing loss occurs on all sides around the debris. This creates a no-signal area that is shaped like a doughnut on the newly recorded tape. The debris can also damage the Mirror Mother Tape. Another disadvantage of the backcoated tape is that the electrical resistance of the magnetic side of the tape is not lowered.

A third approach to reducing static surface charge involved constructing a magnetic recording medium comprising a support, a magnetic layer, and a intermediate layer containing carbon black. However, this approach was wary of the problems believed to be associated with a high content of carbon black in the intermediate layer.

For example, U.S. Patent No. 3,440,091 to Delmore discloses a magnetic recording medium which contains a magnetic layer, a carbon conductive layer with up to 33% by weight carbon black, and a non-magnetic substrate. However, as noted in U.S. Patent No. 4,275,113, the large amount of carbon causes the conductive layer to have a rougher surface, therefore making the upper layer also rougher. This decreases the overall video output level and uniformity. In addition, the adhesiveness of the conductive layer decreases as the amount of carbon is increased because the amount of binder in the layer is lowered. This decreased adhesiveness creates a durability problem in that powder debris or even larger fragments of the magnetic layer are removed during recording or playback, causing head clog, signal loss, and other undesired characteristics.

U.S. Patent No. 4,275,113 to Saito et al. discloses a magnetic recording medium comprising a support sheet, a magnetic layer, and an intermediate layer of resinous polymeric material including particles of carbon black having high oil absorption. The specification limits the amount of carbon to be used to the range of 5 to 30% by weight, preferably 10 to 20%. This patent notes that an amount of carbon black greater than 30% weakens the adhesiveness between the carbon layer and the non-magnetic substrate.

A preferred form of implementation of the invention described hereinbelow at least partially overcomes the problem of rough surface conditions and the decreased adhesiveness caused by carbon layers containing about 30% or more carbon black identified in the prior art. In addition, the preferred form of implementation does not require a carbon powder possessing a high oil absorption so as to provide good adhesion to the basefilm.

Presently, there are no known producers of dual or multilayered tapes with a carbon layer. This is presumably a reflection of the difficulties and problems in developing a usable carbon layer.

There are many problems encountered in developing such a layer. The small carbon particles have high surface area and are difficult to disperse with organic binders. Coatability is also difficult, especially at high speeds, such as about 9.0 m/s or greater. To coat at these higher speeds, the viscosity of the carbon paint is typically lowered. This causes the paint to become extremely non-viscous and prone to streaking, producing an uneven coating. Another major problem is the blending of the upper magnetic layer with the lower carbon layer, due to the lowered viscosity and specific gravity of the carbon layer.

After coating, there are other problems, such as poor surface condition of the upper magnetic layer resulting from projections or streaks in the carbon layer (producing low signal output) or durability problems (produced by powder debris from both the rougher magnetic tape surface and the intermediate carbon layer).

According to one aspect of the invention there is provided: a magnetic recording medium comprising a magnetic recording layer, a non-magnetic basefilm, and an electrically resistive layer containing carbon particles intermediate to the magnetic recording layer and the non-magnetic basefilm, wherein the intermediate electrically conductive layer contains a large ratio by weight of carbon particles relative to the weight of binder; and a method for constructing such a magnetic recording medium. Such a magnetic recording medium can possess a number of superior physical and mechanical characteristics, including reduced static charge, improved tape surface roughness, increased durability, superior thickness uniformity, and increased coating speeds.

According to another aspect of the invention there is provided: a magnetic recording medium as set out in claim 1 hereof; and a method of constructing a magnetic recording medium as set out in claim 9 hereof.

According to a further aspect of the invention there is provided a dual-layered magnetic recording medium comprising an upper magnetic layer, an intermediate flexible conductive layer containing carbon particles, and a non-magnetic substrate or basefilm, and a method for constructing such a dual-layered magnetic recording medium.

In a preferred embodiment, the upper magnetic layer contains only small amounts of or no carbon particles.

The upper magnetic layer, in another preferred embodiment, is rigid, contains magnetic particles, and has a high powder/binder (P/B) weight ratio and a high density of magnetic particles. This upper magnetic layer in this embodiment is coated directly over a flexible intermediate layer containing carbon particles and having a high P/B weight ratio and one or more binders of a very high molecular weight polymer. The carbon particles are present in this intermediate layer in a total solids weight percent of about 60 to 90%, preferably about 70 to 80%. Moreover, when applied in the coating step, a paint from which the intermediate layer is constructed preferably has a % solids by weight range of about 20 to 30%. In a most preferred embodiment, both the upper magnetic layer and the intermediate layer are coated almost simultaneously onto the basefilm.

Rheological properties of two paints from which the magnetic layer and the conductive layer preferably are constructed are preferably adjusted to be similar so as to improve coatability. The P/B ratio of the intermediate layer containing carbon particles may be high so as to improve dispersion, reduce surface roughness, and enhance coatability, while the overall % solids by weight in the intermediate layer may be high to prevent blending of the upper magnetic layer with the intermediate layer containing carbon particles. The flexible intermediate layer containing carbon particles acts both as a stress reliever during coating for the rigid upper magnetic layer and as a basefilm smoother. Thus, the tape surface of the magnetic layer is much smoother than it would be if it were coated directly onto the basefilm.

The preferred form of implementation of the invention can provide the following advantageous effects.
The static charge on the surface of a magnetic recording medium is greatly reduced so as to improve signal dropout and windability for both real time and high speed applications.
The powder/binder (P/B) ratio and packing density of the magnetic powder in the magnetic layer are increased so as to improve video and/or audio signal outputs.
The surface roughness of the magnetic layer is improved by providing an intermediate conductive layer containing carbon particles which can operate as a shock absorbing layer. This improved surface roughness will increase the signal output and the S/N ratio.
A very uniform coating surface and coating thickness is produced. This uniformity will improve jumbo roll appearance and quality.
There is created a durable dual-layered magnetic medium; possessing good adhesion between the magnetic layer and the intermediate layer and between the intermediate layer and the basefilm layer, and no appreciable degradation of signal with the passage of time, head clogging, or powder debris.
There is produced a dual-layered magnetic medium with excellent coatability at high coating speeds, such as about 9.0 m/s or greater.
When the magnetic layer and the intermediate layer are coated simultaneously, paint blending problems between upper and lower layers are avoided. Achieving higher coating speeds will create smoother tape surfaces and, accordingly, a higher signal output and a greater S/N ratio.
Overall light transparency is reduced, thus allowing reduction in coating thickness of the oxide layer without sacrificing video quality.

The invention will now be further described, by way of illustrative and non-limiting example, with reference to the accompanying drawings, wherein:
Figure 1 represents a cross-sectional view of a dual-layered magnetic recording medium embodying the invention;
Figure 2 is a photomicrograph depicting a cross-section of the dual-layered magnetic recording medium embodying the invention before calendaring;
Figure 3 is a photomicrograph depicting a cross-section of a single-layered magnetic recording medium according to the prior art before calendaring;
Figure 4 is a photomicrograph depicting a cross-section of the dual-layered magnetic recording medium embodying the invention after calendaring;
Figure 5 is a photomicrograph depicting a cross-section of the single-layered magnetic recording medium according to the prior art after calendaring;
Figure 6 is a graph correlating powder/binder weight ratio and viscosity;
Figure 7 is a graph correlating powder/binder weight ratio and surface roughness;
Figure 8 is an illustration of the effect of an orientation magnet during a coating operation;
Figure 9 is a graph correlating viscosity and shear rate for two powder/binder weight ratios;
Figure 10 is a graph correlating viscosity and shear rate for two different % solids by weight ratios;
Figure 11 is a photomicrograph depicting the surface of a dual-layered magnetic recording medium having a low powder/binder ratio;
Figure 12 is a photomicrograph depicting the surface of a dual-layered magnetic recording medium having a high powder/binder ratio according to a preferred feature of the invention; and
Figure 13 is a photomicrograph depicting the surface of a single-layered magnetic recording medium.

A preferred form of implementation of the invention that will now be described provides a magnetic recording medium comprising a magnetic upper layer, an intermediate conductive non-magnetic layer, and a non-magnetic substrate or basefilm.

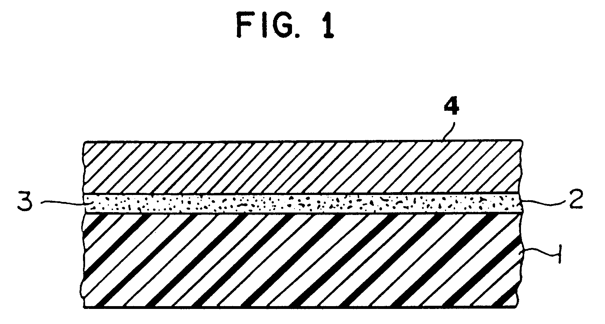

Referring now to Figure 1, a basefilm 1 is made of a polyester resin such as polyethylene terephthalate. On the basefilm 1, an intermediate layer 2 containing carbon particles 3 is formed, and a magnetic layer 4 is formed thereon.

For descriptive purposes only, the examples which follow describe the present invention as applied in video tapes. However, this present invention can be applied to any magnetic recording medium, such as video, audio, or computer tape, or other magnetic recording media.

### Magnetic Layer

The upper magnetic layer contains at least one type of magnetic powder. Typical magnetic powders are gamma or cobalt gamma Fe₂O₃, Fe₃O₄, cobalt Fe₃O₄, Fe, Fe alloys, or CrO₂. However, any type of magnetic powder may be used.

To reduce raw material quantities, many manufacturers in the industry are employing magnetite (Fe₃O₄) instead of gamma Fe₂O₃. Because magnetite is darker, a thinner magnetic layer can be employed without increasing light transmittance and causing video tape recorders (VTRs) to malfunction. The intermediate carbon layer of the present medium enables a magnetic layer employing any magnetic powder, even the lighter, more transparent gamma Fe₂O₃ powders, to be made thinner.

The upper magnetic layer also contains one or more binders. A binder is employed to anchor the magnetic powder pigments to the intermediate conductive layer. The binder or binders for the upper magnetic layer can be one or more of the binders typically used in magnetic mediums, such as, cellulose based resins, nitrocellulose, polyurethanes, vinyl chloride-vinylidene chloride, vinyl chloride copolymers, polyvinyl-butyryl, cellulose derivatives, epoxy resins, urethane elastomers, a copolymer of butadiene and acrylonitrile, thermoelastic resins such as polyesters, thermosetting resins, polyisocyanate-prepolymer, phenol urea, melamine resin, and other polymers. These binders are combined to produce the desired mechanical and physical properties for the upper magnetic layer. The binders should also be chosen so as to provide the best dispersion of the magnetic powder and to produce a high density magnetic paint.

As a result of the presence of the intermediate conducting layer containing carbon particles, the upper magnetic layer can contain no carbon particles or only small amounts of carbon particles. A typical range of the amount of carbon black in the upper magnetic layer is 0 to 10% by weight relative to the amount by weight of magnetic powder, in a preferred embodiment the amount of carbon particles in the upper magnetic layer is 0%. This reduced content of carbon particles in the upper layer means a reduction in the total surface area of all the powders to be dispersed in the organic binders. Accordingly, one can increase the amount of magnetic powder used in the upper layer for a given amount of binder, thus increasing the P/B ratio of the magnetic powders. This higher P/B ratio will have the same tape durability characteristics as the lower P/B ratio tape with carbon (because of the equivalent amount of available binder in each tape to disperse with the powders), while providing higher magnetic powder density and therefore higher magnetic properties and higher signal outputs. Indeed, an increase of 30 mT in magnetic retentivity (Br) was observed with the present medium relative to the prior art.

Moreover, lowering the carbon particle content of the upper magnetic layer results in lower magnetic paint viscosity and thixotropic properties. By lowering these characteristics, coatability at high speeds is greatly improved. In addition, the upper magnetic layer paint properties approach those of the intermediate conductive layer's properties, further improving coatability.

To help disperse these pigments and binders, one or more organic solvents are used. Typical organic solvents include, but are not limited to, methyl ethyl ketone, methyl isobutyl ketone, toluene, cyclohexanone and tetrahydrofuran. If needed, various coupling agents can also be added to the magnetic powder to improve dispersion. Typical coupling agents are identified in U.S. Patent No. 4,076,890, which is incorporated herein by reference.

The upper magnetic layer can also contain suitable additives to confer desired characteristics. Such additives include abrasives, lubricants, curing agents, and stabilizers.

The upper layer is dispersed and milled using conventional mixing and kneading techniques, then stored and filtered prior to coating. Conventional dispersion techniques are employed similar to those discussed in T. C. Patton's Paint Flow and Pigment Dispersion, John Wiley & Sons, 1964.

### Carbon Layer

The intermediate conductive carbon particle layer comprises a carbon particle powder with a moderately high specific surface area, preferably 100 to 400 m²/g. These powders typically have diameter sizes in the range of 0.01 to 0.04 µm. Preferably, the powders should also have relatively low oil absorption, in the range of 40 to 80 cc(DBP)/100g.

Carbon particles represent 60 to 90% of the total solids by weight of the carbon layer. The carbon particles are present in this intermediate layer in a total solids weight percent of about 60 to 90%, preferably about 70 to 80%. Moreover, when applied in the coating step, the paint from which the intermediate layer is constructed has a % solids by weight range of about 20 to 30%.

Although both oxygen-treated and non-treated carbon powders can be used, oxygen-treated carbon powder is preferred for better dispersion. The lower conductivity of oxygen-treated carbon powders is compensated for by the higher carbon content of the present medium For example, in U.S. Patent No. 4,275,113, surface electrical resistivity values for test samples ranged from 10⁶ to 10¹¹ Ω/sq, depending on the carbon weight % used, which ranged from 5 to 40%. Test samples embodying the present invention exhibited surface electrical resistivity values of 10⁴ Ω/sq, a factor of 100 to 10,000,000 lower resistivity.

The intermediate conductive carbon particle layer also comprises one or more very high molecular weight binders employed to disperse the carbon particles. The binders used for dispersing the carbon desirably have molecular weights (M_{w}) ≧ 40,000, preferably between 40,000 to 120,000, and molecular weights (Mₙ) ≧ 15,000, preferably between 20,000 to 50,000. Suitable polymers include polyester resins, polyurethane resins, polyvinyl formal, and polyhydroxypolyester resin. These resins preferably contain either sulfonic acid (SO₃M, where M = H, Na, K, etc.) or tertiary amine (R₃N) functional groups. The tertiary amine is a by-product of ammonia (NH₃) permutated by hydrocarbons:
RNH₂ = 1° Amine
R₂NH = 2° Amine
R₃N = 3° Amine,
where R = a hydrocarbon radical containing 1 to 20 carbon atoms, either linear or branched, saturated or unsaturated.

By combining these binders with the carbon particles, a higher P/B ratio of the carbon paint could be achieved, which not only increased conductivity but also improved coatability and surface roughness. Moreover, coatability at higher speeds was also improved. To achieve good coatability at higher speeds, the viscosity of the paint needs to be lowered. In the prior art, this was generally done by reducing the solids content of the paint through the addition of solvents. By using the binders disclosed herein, a higher % solid by weight paint can be achieved which has the same low viscosity as a lower % solid by weight paint. This is very advantageous, because paints with higher % solids by weight pose less blending or mixing problems between the upper magnetic layer and the intermediate layer during wet-on-wet coating. If lower viscosities are needed for even higher coating speeds, the % solids by weight of the paint disclosed herein can be reduced even further without incurring blending problems. Thus, the coatability characteristics has been improved relative to the prior art.

Various organic solvents similar to the ones used for the magnetic layer are added to disperse the carbon particles and binders. Typical organic solvents include, but are not limited to, methyl ethyl ketone, methyl isobutyl ketone, toluene, cyclohexanone and tetrahydrofuran. Additionally, one or more coupling agents, such as the various silanes identified in U.S. Patent No. 4,076,890 (incorporated herein by reference) may also be used, if necessary, to aid dispersion.

### Non-Magnetic Substrate or Basefilm

For the present invention, any suitable material for magnetic recording applications can be used, such as polyethylene terephthalate (PET). Moreover, with the intermediate conductive layer as disclosed herein, newer, smoother basefilms can be used.

One benefit of the reduced static charge on the magnetic surface of the present medium reduced attraction of basefilm debris when smoother basefilms with organic fillers are used. The smoother surfaces of these basefilms can improve the upper surface of the coated magnetic layer. However, the use of organic fillers for abrasives, rather than the harder inorganic fillers like SiO₂ or Al₂O₃, can result in easier scratch damage on the underside of the tape by tape cassette guide pins. With reduced static charge, the resulting basefilm debris is not easily attracted to the magnetic surface (especially for higher coating speeds), so there is no increased dropout. Thus, smoother basefilms with organic fillers can be used, permitting a smoother magnetic layer coating and, thus, greater video output for the present recording medium.

### Carbon Dispersion Process and Rheological Properties

Carbon particles or pigments, in general, have a much higher specific surface area for a given weight amount than magnetic pigments. Thus, a larger quantity of binder is required to disperse a given weight of carbon relative to the same weight of magnetic powder. This is the predominant reason that U.S. Patent No. 4,275,113 limited the carbon black amount to no greater than 30% by weight (and preferably 10 to 20% by weight). With carbon percentages greater than this, it was believed that there was insufficient binder to provide good adhesion or tape durability.

However, this lower powder/binder (P/B) ratio facilitates streaking of the coated surface(especially for higher coating speeds), thus, affecting the surface of the upper magnetic layer. With 30% or less carbon by weight, not only is there significant upper surface roughness, but also a blending problem between the upper magnetic layer (which typically has a much higher specific gravity) and the intermediate layer is more likely to occur. This blending problem is especially affected by the % solids by weight of the two paints from which the upper layer and the intermediate layer are constructed. From many tests, the inventors observed that a higher weight percent of carbon was necessary to achieve improved dispersion, reduced surface roughness, and better coatability at normal or higher coating speeds. For these reasons, carbon particles with a total solids weight percent of 60 to 90% of the intermediate layer is preferred, and most preferably 70 to 80% of the total solids by weight.

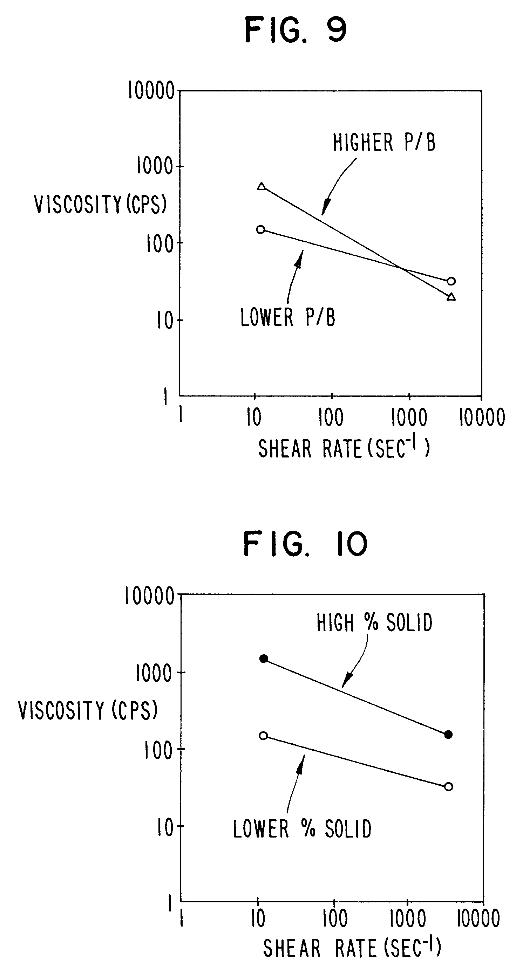

For most paints of the prior art, the viscosity changes relatively little as the shear rate is increased. Thus, to achieve the low viscosities necessary for good coatability (especially at higher speeds), the % solids by weight of the prior art paints were lowered by adding solvents prior to coating. In contrast, the present paint's viscosity is strongly affected by the shear rate. As the prevalent shear rate increases, the viscosity decreases. At very high shear rates (similar to those found during the coating process), the viscosity of the present paint becomes very low as illustrated in Figures 9 and 10.

When the P/B ratio for this intermediate layer paint is increased, the slope of the viscosity versus shear rate curve also increases. Although the viscosities at lower shear rates increase, the viscosities at high shear rates actually become lower. The paint viscosity can thus be kept low or even reduced further, while the P/B ratio is increased (without having to decrease the % solids by weight of the paint). Therefore, the present paint, with its high weight percent of carbon particles relative to binder in the intermediate layer, has the same or lower viscosity during coating as prior art paints with a lower % solids by weight content. To improve coatability at even higher speeds, the present paint's viscosity can be lowered even further by decreasing the % solids. The prior art paints (which already have reduced % solids) cannot be further lowered without creating streaks, poor surface roughness, and blending between the upper magnetic and lower carbon layer. (Blending occurs when the lower carbon layer can no longer support the upper magnetic layer which has a higher specific gravity.)

Accordingly, the present paint can coat faster and cover the basefilm better at both normal and high coating speeds without surface or blending problems. Overall dispersion, surface roughness, coatability, and conductivity are also better than prior art because of the higher P/B ratio used.

Further, the rheological properties of the intermediate carbon layer paint with a high P/B ratio is more similar to upper magnetic layer paints than those of the prior art. For example, although the viscosity itself is lower for the carbon layer, the viscosity versus shear rate slopes are similar. Thus, the two layers coat better and are compatible with each other. From many tests, no adhesion, durability, reliability, or signal output problems have been observed from the union of these two layers.

To disperse the lower layer paint, the carbon, binder, optional coupling agents, and solvents should be premixed, kneaded or milled, and filtered and stored prior to coating.

### Coating Process

The upper magnetic layer and intermediate layer are coated onto the non-magnetic substrate or basefilm. The coating process can be done using either a wet-on-dry or wet-on-wet coating method. To achieve the smoothest magnetic surface, however, the almost simultaneous coating of the two layers (wet-on-wet) is preferred.

Methods for coating can include any of the various conventional methods available for surface coatings, such as gravure, transfer roll, spray, and die. Details of these different methods are provided in Asakura Shoten's Coating Engineering, 1971.

Prior to coating, the % solids by weight for the carbon layer should be adjusted to obtain optimum coating conditions. These coating conditions will also vary, depending on the desired coating speed.

Usually, during dual coating with a carbon intermediate layer and a magnetic upper layer in a wet-on-wet coating method, streaks on the upper surface will appear. These streaks increase the surface roughness of the tape. To develop a dual-coated tape with an intermediate layer containing carbon particles, it is necessary to overcome this streaking problem. To solve this problem, the rheological properties affected by changing the carbon paint formulation were focused on.

Normally, carbon layers are made with low P/B (Powder/Binder) ratios for backcoating purposes. These ratios are low because runability and durability are important characteristics for the back-coatings. However, for the intermediate layer of a dual-layered tape, this is not so important because the magnetic layer covers the carbon layer.

Mixing table tests were conducted to find the optimum intermediate layer paint conditions, such as P/B ratio and % solid of the paint.

Table 1 reports the paint properties of the carbon paint and tape surface properties for single-layered carbon tape with various P/B ratios.

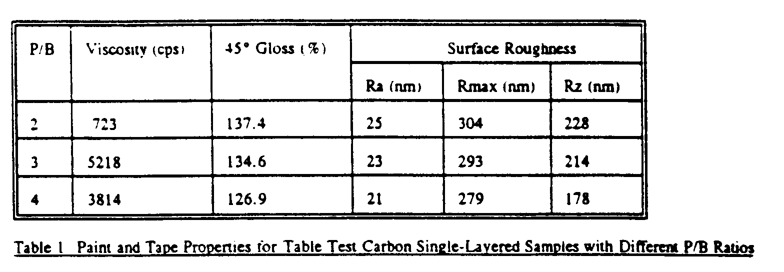

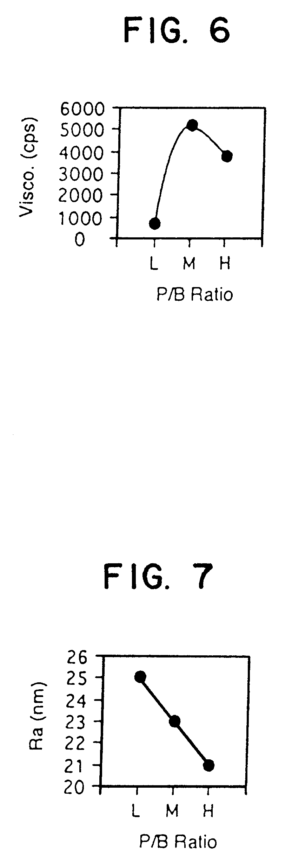

Figure 6 summarizes the relationship between P/B ratio and viscosity, and Figure 7 demonstrates the relationship between P/B ratio and surface roughness. According to this data, increased P/B ratio could result in better dispersion (high viscosity) and reduced surface roughness.

To investigate the coatability of different P/B ratio layer paints, a dual coating table test was conducted. Table 2 shows tape surface properties for each P/B ratio of the intermediate layer paint. The coating test was conducted with two different coating speeds (0.2 m/s and 1.7 m/s).

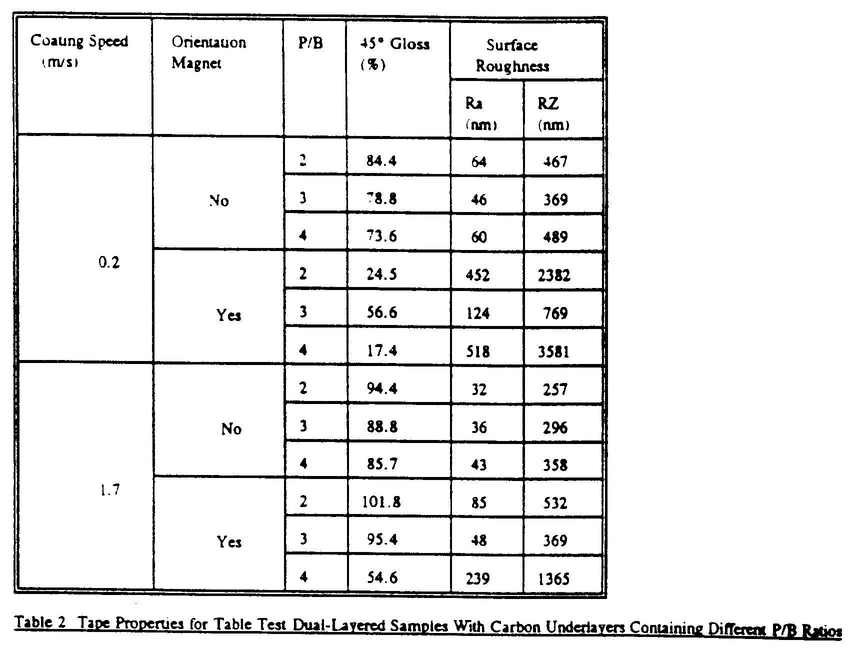

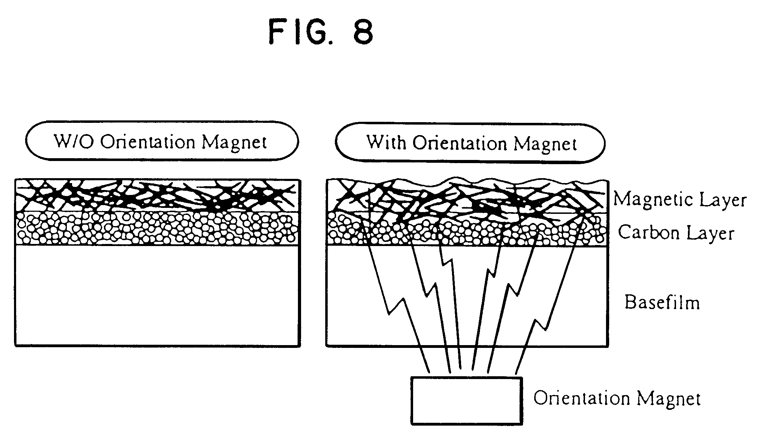

Results also showed that coating operations carried out without an orientation magnet had better gloss and surface roughness than those carried out with an orientation magnet. Because the orientation magnet used in this test was located on the opposite side of the basefilm from the coating side, the magnetic particles appeared to move toward the orientation magnet during coating (Figure 8). Visually, many streaks were observed on the surface, especially for lower P/B ratio samples.

Because the higher P/B samples were so viscous, the coating quality was not applicable for comparison. Also, the lower P/B with lower % solid sample had a blending problem in which the magnetic paint and carbon paint mixed during dual hand coating because the carbon paint was so water-like. However, the middle P/B samples showed the best overall coating quality in this test.

To identify coatability and tape quality, test paints were made with different P/B ratios using the same binder and % solid.

Figure 9 illustrates the rheological characteristics for both lower and higher P/B ratios of the intermediate layer paint. This data demonstrates that the viscosity at the high shear rate is almost the same for both P/B ratios, but an increased P/B ratio results in an increase in viscosity at lower shear rates.

Figure 10 illustrates the rheological characteristics for two different % solids by weight of the intermediate layer paint. This data demonstrates that different % solids of the paint alter the viscosity for all shear rates. Thus, there are two different phenomena operating, one where the P/B ratio is altered, and the other where the % solids by weight of the paint is changed.

According to these test results, the rheological properties are controlled by both P/B ratio and % solid of the paint. The P/B ratio controls the slope of the viscosity vs. shear rate relationship, while % solid controls the viscosity for the entire shear rate vs. viscosity relationship.

A coating test was conducted to examine the relationship between tape surface quality and paint conditions.

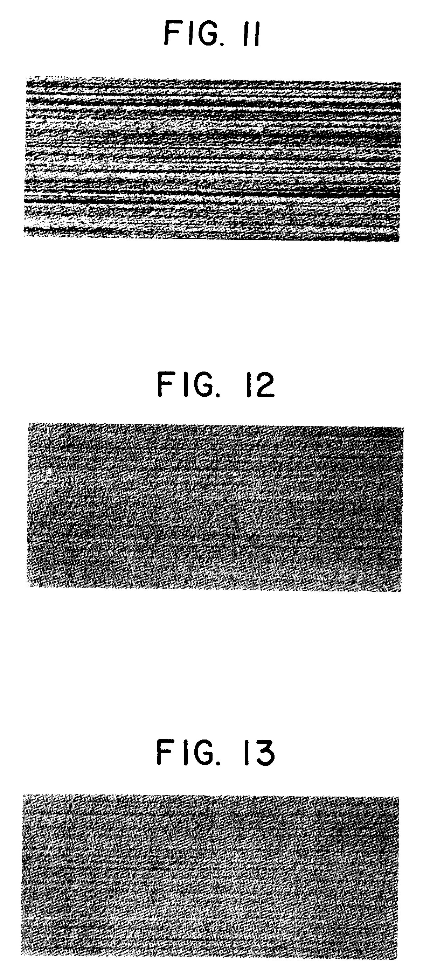

Figure 11 shows the surface of a dual-layered tape with a lower P/B ratio. This tape has many streaks on the tape surface. Figure 12 shows the surface of a dual-layered tape with a higher P/B ratio. This sample has surface characteristics equivalent to a magnetic layer single coating tape (Figure 13).

By selecting the type of the very high molecular weight binders employed in the intermediate layer employed with a high P/B ratio of carbon particles in the intermediate layer, the carbon paint viscosity could be lowered without decreasing the % solids by weight of the paint. Thus, a higher % solids by weight paint (20 to 30%) can be used, which has a low viscosity (20-200 cps) and can be coated at very high speeds (≧ 9.0 m/s). The higher % solids by weight also eliminates the blending problem during coating. Other advantages of the present medium include rheological properties of the intermediate layer closer to that of the magnetic layer, faster dispersal, and superior tape properties.

To further enhance simultaneous coating of the two layers, the rheological or flow characteristics of the two layers should be similar. However, properties of the iron oxide layers have generally been much different from the intermediate layers in the prior art paints. Typically, a higher weight percent of pigments is present in the upper magnetic layer relative to the intermediate carbon layer.

With the present medium, the weight percent of pigments is closer for both the upper magnetic layer and the carbon intermediate layer. Accordingly, the two layers have closer specific gravities. In addition, by reducing or eliminating carbon from the upper magnetic layer, the viscosity of the magnetic paint is also lowered. This makes it even more rheologically similar to the intermediate carbon layer paint. Further, the % solids by weight of the two layers are similar, as a result of the high molecular weight binders and higher weight percent of carbon used in the intermediate layer. By sharing these similarities, the two layers coat better without blending or surface roughness problems.

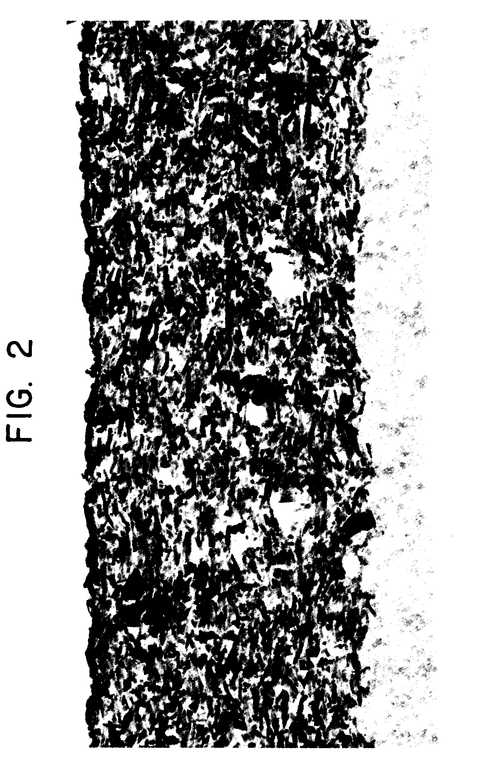

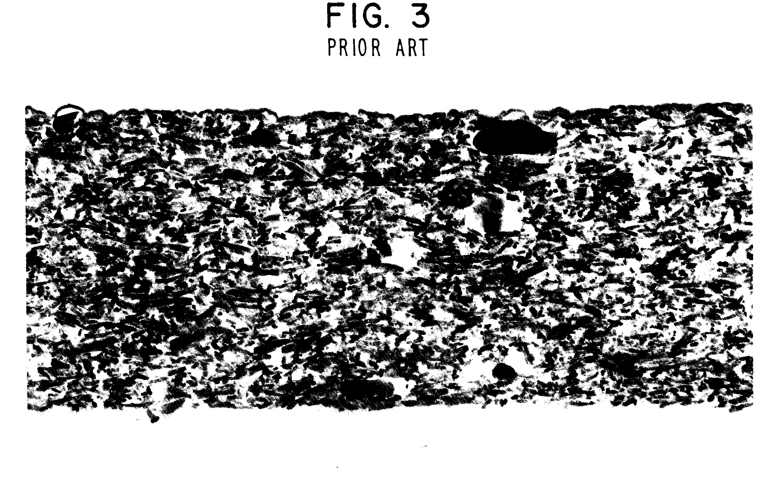

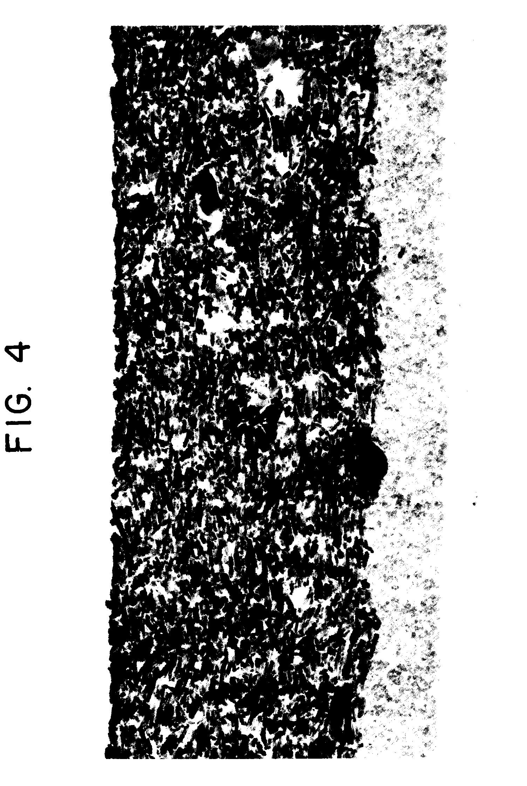

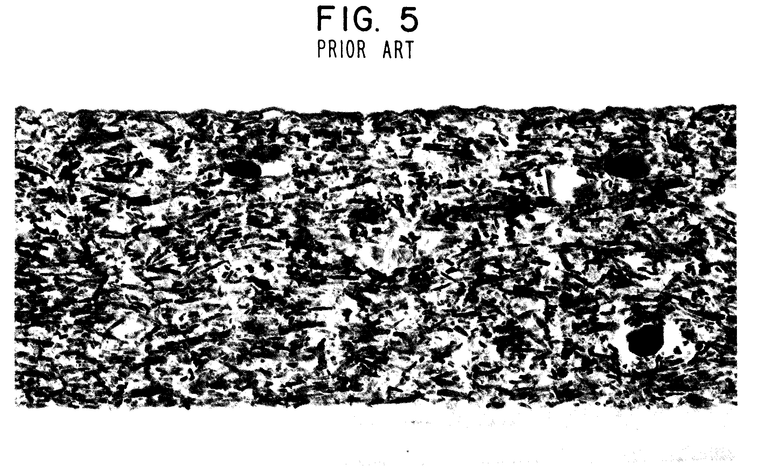

As noted earlier, the magnetic layer is very rigid and resistive to flow. In addition, the average magnetic particles (0.2-0.8 µm x 0.03-0.13 µm) are larger than the lower layer carbon particles (0.01-0.04 µm) and the viscosity is higher for the magnetic layer (2000 to 4000 cps) versus the carbon layer (20 to 200 cps). During wet-on-wet coating, the intermediate flexible carbon layer actually acts as a shock absorbing layer or cushion for the rigid magnetic layer by absorbing the shear stresses created during coating. Additionally, undispersed clumps and large abrasive particles can be pushed down into the carbon layer by a smoothing bar or some other similar device during coating. As such, these fragments do not manifest themselves at the surface of the upper magnetic layer as either a blemish or bump. Thus, there are no blemishes or stress-related wrinkles on the tape surface. The resulting surface is very smooth and a very uniform coating thickness is achieved. This surface is further enhanced after calendaring (see Figures 2 through 5). The excellent surface has less coating-related problems such as machine direction (MD) stretch, which is caused by an uneven coating thickness.

Even more surprising is how the intermediate layer absorbs the projections found on the surface of the basefilm. Basefilms use various abrasive fillers such as CaCO₃, A1₂0₃, or SiO₂ to increase the film's durability. These fillers produce projections or asperities along the film's surface. The upper surface of the rigid magnetic paint of the prior art is coated over the basefilm and generally reflects or is affected by the surface roughness of the basefilm below. With the present medium, however, the magnetic layer does not reflect this surface, because of the effect from the flexible carbon layer, which has a viscosity and consistency close to that of H₂0. The lower contact surface of this layer flows around the asperities, while the upper contact surface absorbs the stresses and projections from the magnetic layer above. This double effect gives the present medium a smoother magnetic surface than the prior art. After calendaring, the effect becomes even more pronounced.

Obviously, numerous modifications and variations of the present invention are possible in light of the above teachings. It is therefore to be understood that within the scope of the appended claims, the invention may be practiced otherwise than as specifically described herein.

## Claims

1. A magnetic recording medium comprising:
a magnetic recording layer,
a non-magnetic basefilm, and
an electrically conductive layer containing carbon particles intermediate to the magnetic recording layer and the non-magnetic basefilm,
wherein the intermediate electrically conductive layer comprises carbon particles and one or more organic binders and wherein the intermediate electrically conductive layer has a ratio of the weight of carbon particles relative to the total weight of all solid particles in the range of about 60 to 90%, wherein said solid particles comprise carbon particles, plus one or more organic binders.

2. A magnetic recording medium according to claim 1, wherein the intermediate electrically conductive layer has a ratio of the weight of carbon particles relative to the total weight of all solid particles in the range of about 70 to 80%.

3. A magnetic recording medium according to claim 1 or claim 2, wherein said organic binders have a molecular weight (M_{w}) of greater than 40,000 daltons.

4. A magnetic recording medium according to claim 1 or claim 2, wherein said organic binders have a molecular weight (M_{w}) of greater than 40,000 daltons and less than 120,000 daltons.

5. A magnetic recording medium according to claim 1 or claim 2, wherein said organic binders have a molecular weight (Mₙ) of greater than 15,000.

6. A magnetic recording medium according to claim 1 or claim 2, wherein said organic binders have a molecular weight (Mₙ) of greater than 20,000 and less than 50,000.

7. A magnetic recording medium according to any one of the preceding claims, wherein said intermediate electrically conductive layer is produced from a paint containing about 20 to 30% solids by weight.

8. A magnetic recording medium according to any of the preceding claims, wherein said intermediate electrically conductive layer and said magnetic recording layer are applied almost simultaneously, as in a wet-on-wet coating process.

9. A method of constructing a magnetic recording medium, the method comprising the steps of:
applying an electrically conductive layer containing carbon particles to a non-magnetic base film, and
applying a magnetic recording layer to said electrically conductive layer,
wherein the intermediate electrically conductive layer comprises carbon particles and one or more organic binders and wherein the intermediate electrically conductive layer has a ratio of the weight of carbon particles relative to the total weight of all solid particles in the range of about 60 to 90%, wherein said solid particles comprise carbon particles, plus one or more organic binders.

10. A method according to claim 9, wherein the intermediate electrically conductive layer has a ratio of the weight of carbon particles relative to the total weight of all solid particles in the range of about 70 to 80%.

11. A method according to claim 9 or claim 10, wherein said organic binders have a molecular weight (M_{w}) of greater than 40,000 daltons.

12. A method according to claim 9 or claim 10, wherein said organic binders have a molecular weight (M_{w}) of greater than 40,000 daltons and less than 120,000 daltons.

13. A method according to claim 9 or claim 10, wherein said organic binders have a molecular weight (Mₙ) of greater than 15,000.

14. A method according to claim 9 or claim 10, wherein said organic binders have a molecular weight (Mₙ) of greater than 20,000 and less than 50,000.

15. A method according to any one of claims 9 to 14, wherein said intermediate electrically conductive layer is produced from a paint containing about 20 to 30% solids by weight.

16. A method according to any one of claims 9 to 15, wherein said intermediate electrically conductive layer and said magnetic recording layer are applied almost simultaneously, as in a wet-on-wet coating process.
